# EUROPÄISCHE PATENTSCHRIFT

(11) **EP 3 523 671 B1**
(45) Veröffentlichungstag und Bekanntmachung des Hinweises auf die Patenterteilung: **30.12.2020**
(21) Anmeldenummer: 17780620.5
(22) Anmeldetag: 15.09.2017
(51) Int. Cl.: G01S 1/04, G01S 1/22, G01S 1/14, G01S 5/14

(54) **VERFAHREN UND VORRICHTUNG ZUR POSITIONSBESTIMMUNG**
METHOD AND DEVICE FOR POSITION DETERMINATION
PROCÉDÉ ET DISPOSITIF DE DÉTERMINATION DE POSITION

(30) Priorität: 08.10.2016 DE 102016012101
(43) Veröffentlichungstag der Anmeldung: 14.08.2019
(73) Patentinhaber: Forschungszentrum Jülich GmbH, 52425 Jülich (DE)
(72) Erfinder: YAO, Yu, 52134 Herzogenrath (DE); VAN WAASEN, Stefan, 41836 Hückelhoven (DE); XIONG, Renhai, Hangzhou City 311121 (CN); SCHIEK, Michael, 52066 Aachen (DE)
(86) Internationale Anmeldenummer: PCT/DE2017/000300
(87) Internationale Veröffentlichungsnummer: WO 2018/064994

(56) Entgegenhaltungen:
- US-A1- 2007 042 706
- US-A1- 2009 243 932

## Beschreibung

Die Erfindung betrifft ein Verfahren und eine Vorrichtung zur Positionsbestimmung

Zur Positionsbestimmung von Objekten sind nach dem Stand der Technik verschiedene Methoden bekannt.

Im Alltag wird sehr häufig vom GPS-Verfahren Gebrauch gemacht, beispielsweise um Fahrzeuge zu navigieren. Dabei werden mindestens vier Sender herangezogen, die sich in der Erdumlaufbahn befinden und die synchronisiert wurden, bevor sie den Boden verlassen haben. Diese Sender senden synchrone Signale aus, die auch eine Information über deren Position enthalten. Das zu navigierende Objekt besitzt einen Empfänger, der die Signale aufnimmt und daraus seine eigene Position bestimmt. Hierbei werden relativistische Effekte berücksichtigt. Die Methode ist beispielsweise in der Veröffentlichung http://www.navcen.uscg.gov/pubs/gps/apsuser/gpsuser.pdf. beschrieben.

Ein weiteres Verfahren ist in der Patentanmeldung DE 10 2011 107 333 A1 der Anmelderin beschrieben. Dieses Verfahren ermöglicht die Positionierung von Objekten in geschlossenen Räumen bis hinab zu Entfernungen im Labormaßstab. Dabei sendet ein Objekt, dessen Position bestimmt werden soll, ein Signal ab, dessen Frequenz bekannt ist und mehrere Empfänger, deren Positionen bekannt sind, bestimmen die Phase des Signals und leiten daraus die Position des Senders ab.

Die Veröffentlichung "A 5,8 GHz Local Positioning and Communication System", Mosshammer et al. (2007) IEEE/MTT-S International Microwave Symposiom, Seite 1237 - 1240, offenbart ein Verfahren zur Positionsbestimmung eines Objekts, bei dem das Objekt, dessen Position bestimmt werden soll, ein Signal aussendet, welches seine Frequenz zeitlich ändert und das von Basisstationen empfangen und zurückgesendet wird. Das Objekt empfängt das zurückgesendete Signal und registriert die Amplitude in Abhängigkeit der Frequenz.

Mit den Verfahren nach dem Stand der Technik sind Nachteile verbunden.

So funktioniert die GPS-Methode in Gebäuden nur eingeschränkt.

Bei dem Verfahren nach der DE 10 2011 107 333 A1 ist die Anzahl der Objekte, deren Position bestimmt werden kann, beschränkt.

Bei dem Verfahren von Mosshammer et al. können die Signale der Basisstationen nur nacheinander empfangen werden, die Ausnutzung der Bandbreite ist ineffizient, es ist eine Synchronisation zwischen Basisstation und dem Objekt, dessen Position bestimmt werden soll, erforderlich und Basisstation und Objekt müssen sowohl senden als auch empfangen. In Gebäuden besteht grundsätzlich das Problem, dass Signale von Wänden reflektiert werden.

Die Schrift US 2009/243932 offenbart ein Verfahren zur Positionsbestimmung mindestens eines Messobjekts, welches eine mobile Station mit einem Empfänger beinhaltet und bei dem mindestens vier Referenzobjekte, die eine Basisstation und einen Sender beinhalten, wobei mindestens ein Referenzobjekt eine mobile Station mit einem Empfänger besitzen kann, und damit Referenzobjekt und Messobjekt zugleich ist, wobei die Basisstation und die mobile Station baulich vereint sein können, und wobei die Referenzobjekte zunächst eine bekannte Position haben, die sich ändern kann, wobei die Sender der Basisstationen Signale versenden und die mobilen Stationen Signale empfangen.

Die Schrift US 2007/0042706 offenbart ein Verfahren zur Positionsbestimmung bei dem mindestens zwei Sender einer Basisstation periodische Signale unterschiedlicher Frequenzen in zueinander definierten Zeitabständen aussenden, wobei diese Frequenzen eng benachbart sind.

Es ist daher die Aufgabe der Erfindung, ein Verfahren und eine Vorrichtung zur Verfügung zu stellen, mit denen die Nachteile des Standes der Technik überwunden werden können. Es soll eine genaue Ortsbestimmung von Objekten an Orten, wo andere Positionsbestimmungssysteme keine genügende Genauigkeit oder Signalstärke aufweisen, ermöglicht werden, beispielsweise in Gebäuden und Räumen, in dicht bebauten Gebieten oder unter der Erde, auch wenn zu lokalisierende Objekte im Erdreich vergraben sind. Insbesondere soll eine Positionsbestimmung von Objekten ermöglicht werden, die sich in Gebäuden oder Räumen befinden. Die Messrate soll möglichst hoch sein. Sie sollte in einer Größenordnung von einer Messung pro Sekunde bis zu 1000 Messungen pro Sekunde oder höher sein. Die Genauigkeit der Ortsbestimmung soll insbesondere gegenüber dem GPS-Verfahren erhöht werden. Das Verfahren soll für die gleichzeitige Ortsbestimmung von einer beliebigen Anzahl von Objekten eingesetzt werden können. Probleme, die von Reflektionen der Signale an Wänden ausgehen, sollen verringert oder verhindert werden.

Ausgehend vom Oberbegriff des Anspruchs 1 und des nebengeordneten Anspruchs wird die Aufgabe gelöst, mit den Merkmalen des kennzeichnenden Teils dieser Ansprüche.

Mit dem erfindungsgemäßen Verfahren und der Vorrichtung ist es nunmehr möglich, die Position von Objekten an Orten, wo andere Positionsbestimmungssysteme keine genügende Genauigkeit oder Signalstärke aufweisen, zu ermöglichen, beispielsweise in Gebäuden und Räumen, in dicht bebauten Gebieten oder unter der Erde, auch wenn zu lokalisierende Objekte im Erdreich vergraben sind. Insbesondere kann die Position in Gebäuden oder Räumen mit sehr hoher Ortsgenauigkeit und einer hohen Messrate bestimmt werden. Es können Positionen von mehreren Objekten einer beliebigen Anzahl gleichzeitig bestimmt werden. Messprobleme, die sich durch Reflektion von Signalen an Wänden ergeben können verringert oder ausgeschaltet werden.

Vorteilhafte Weiterbildungen der Erfindung sind in den Unteransprüchen angegeben.

Im Folgenden wird die Erfindung in Ihrer allgemeinen Form beschrieben, ohne dass dies einschränkend auszulegen ist.

Erfindungsgemäß ist mindestens ein Objekt, dessen Position zu bestimmen ist, mit einer mobilen Station ausgestattet, die einen Empfänger besitzt. Das Objekt mit mobiler Station und Empfänger wird als Messobjekt bezeichnet.

Ein Objekt im Sinne der Erfindung ist jeder Gegenstand oder jedes Lebewesen, dessen Position bestimmt werden soll.

Des Weiteren kann ein Objekt im Sinne der Erfindung auch ein Teil eines Gegenstandes oder ein Teil eines Lebewesens sein, z.B. das Handgelenk einer Person, oder die Spitze eines Fingers, oder das Knie einer Person. Das Objekt kann in der einfachsten Ausführungsform auch das Gehäuse einer mobilen Station sein.

Es werden mindestens vier Objekte eingesetzt, die jeweils mit einer Basisstation ausgestattet sind, die einen Sender besitzt. Objekte, die eine Basisstation mit Sender haben, werden im Folgenden Referenzobjekte genannt. In diesem Fall ist das Objekt das Gehäuse einer Basisstation.

Referenzobjekte dürfen auch mit einer mobilen Station ausgestattet sein.

Objekte, deren Positionen zu bestimmen sind, können auch mit Basisstationen ausgestattet werden und zu den Referenzobjekten gehören. In diesem Fall besitzen die Referenzobjekte Basisstationen und mobile Stationen, die baulich in einem Gerät vereint sein können und dabei einen Sender und einen Empfänger besitzen. Die Anzahl der Objekte bzw. Messobjekte, deren Positionen zu bestimmen sind, kann beliebige Werte annehmen. Beispielsweise können 2, 3, 4, 5, 6, ... 10, ... 20, 50 ... 100 oder mehr Objekte bezüglich ihrer Position bestimmt werden.

Die Referenzobjekte, und damit auch zu den Referenzobjekten gehörenden Basisstationen mit Sendern, haben dabei zunächst eine feste Position, die sich auch ändern kann. Die Positionen der Referenzobjekte werden vor der Inbetriebnahme bestimmt bzw. festgelegt, damit bekannt ist, an welchen Ortskoordinaten sich die Referenzobjekte befinden. Für die Durchführung des Verfahrens werden mindestens vier Referenzobjekte benötigt, es können jedoch auch mehr als vier, beispielsweise 5, 6, 7, 8, 9, 10, 20 ... 50 oder mehr vorhanden sein. Je höher die Anzahl der Referenzobjekte ist, desto genauer ist die Positionsbestimmung.

Die Sender der Referenzobjekte senden in zueinander definierten Zeitabständen, beispielsweise synchron oder in fest definierten Zeitabständen, die teilweise synchron sein können. Erfindungsgemäß senden mindestens zwei Sender der mindestens vier Basisstationen der Referenzobjekte Signale unterschiedlicher Frequenz aus, die eng benachbart sind und die ein periodisches Muster aufweisen.

Eng beieinanderliegende Frequenzen liegen weniger als die Bandbreite der verwendeten Signale auseinander. Insbesondere können sie weniger als die reziproke Periodendauer der verwendeten Signale auseinanderliegen. Das hat den Vorteil, dass die Phase der Signale leichter für eine Verfeinerung der Positionsbestimmung herangezogen werden können und der verfügbare Frequenzbereich effizient ausgenutzt wird.

Dabei verhalten sich eng beieinanderliegende Frequenzen der Sender der Basisstationen der Referenzobjekte zueinander gemäß Formel 1 $\left|{f}_{n}-{f}_{m}\right| mod Δ f \neq 0$ (Formel 1)

In Formel 1 ist:
fₙ die Frequenz eines Senders einer beliebigen Basisstation eines Referenzobjektes,
fₘ die Frequenz eines Senders einer beliebigen anderen Basisstation eines Referenzobjektes und
Δf der Frequenzabstand zwischen den Maxima im Fourier-Spektrum der verwendeten Signale.

Dabei müssen die Periodendauern der periodischen Muster so gewählt sein, dass Δf für die Sender der Basisstationen der Referenzobjekte, deren Frequenzen eng beieinander liegen, gleich ist.

Vorteilhaft verwenden Sender der Basisstationen von Referenzobjekten, die auf eng beieinanderliegende Frequenzen senden, Sendesignale mit dem gleichen periodischen Muster. Das hat den Vorteil, dass der Vergleich von Signalen verschiedener Sender der Basisstationen von Referenzobjekten einfacher wird.

Die periodischen Muster haben den Vorteil, dass die Sendesignale diskrete Fourier-Spektren mit schmalen, deutlich ausgebildeten Maxima aufweisen.

Es ist aber auch denkbar, dass eng benachbarte Frequenzen mindestens teilweise unterschiedliche periodische Muster aufweisen.

Die periodischen Muster können frei gewählt werden und sich verschiedenartig gestalten.

Beispielsweise können die Sendesignale der Sender von Basisstationen mit definierter Zeittaktung gepulst sein.

Die Dauer der Pulse kann frei gewählt werden. Ebenso kann der Abstand der Pulse frei gewählt werden.

Die Phase und/oder Amplitude kann kontinuierlich oder diskontinuierlich Änderungen erfahren, beispielsweise in Form einer Zunahme oder Abnahme oder einer sprunghaften Änderung der Amplitude und Phase.

In einer Ausführungsform der Erfindung haben mindestens vier Basisstationen der Referenzobjekte Sender, die alle synchron auf eng benachbarten Frequenzen senden.

In einer weiteren Ausführungsform besitzen alle Basisstationen der Referenzobjekte Sender, die auf eng benachbarte Frequenzen synchron senden.

In einer weiteren Ausführungsform gibt es Gruppen von Referenzobjekten, deren Basisstationen jeweils mindestens einen Sender haben, die innerhalb der Gruppe auf eng benachbarten Frequenzen senden, wobei die Frequenzbereiche der Gruppen weit auseinander liegen.

In einer weiteren Ausführungsform senden mindestens zwei Sender von Basisstationen der Referenzobjekte Signale, deren Frequenzen weit auseinander liegen.

Weit auseinander liegende Frequenzen sollten eine Frequenzdifferenz aufweisen, die größer ist als die Bandbreite der verwendeten Signale. Das hat den Vorteil, dass verschiedene Sender leicht voneinander unterscheidbar sind.

In einer weiteren Ausführungsform hat ein Teil der mindestens vier Basisstationen der Referenzobjekte mindestens einen Sender, die jeweils synchron auf weit auseinander liegenden Frequenzen senden.

In einer weiteren Ausführungsform haben mindestens zwei der mindestens vier Basisstationen der Referenzobjekte einen Sender, der jeweils zeitversetzte Signale aussendet. Diese können gleiche Frequenzen besitzen, jedoch müssen nicht alle Sender der Basisstationen der Referenzobjekte, die zeitversetzte Signale aussenden, die gleiche Frequenz aussenden.

Als Sendesignale können elektromagnetische Wellen eingesetzt werden. Grundsätzlich kommen Radiowellen, IR-Wellen, Licht, insbesondere Funkwellen mit Frequenzen im Bereich der ISM-Bänder als Sendesignale in Betracht.

Beispielhaft aber nicht beschränkend können folgende Basisstationskombinationen der Referenzobjekte eingesetzt werden, die in Tabelle 1 dargestellt sind, in der die Basisstationen mit BS abgekürzt sind.

Weiterhin können nicht beschränkend Frequenz- und Zeitfensterkombinationen eingesetzt werden, die in Tabelle 2 und 3 dargestellt sind. In Tabelle 2 und 3 sind M₁, M₂ und M₃ verschiedene periodische Muster und f₁. f₂, f₃ und f₄ verschiedene Frequenzen. Die Frequenzen f₁ und f₂ sowie f₃ und f₄ sind jeweils eng benachbart. Die Frequenzpaare f₁, f₂ und f₃, f₄ liegen weit auseinander

In einer vorteilhaften Ausführungsform werden wenigstens ein Teil der Referenzobjekte, jedoch mindestens drei, vorzugsweise alle Referenzobjekte, zusätzlich zur Basisstation mit einem Sender auch mit mobilen Stationen mit einem Empfänger ausgestattet. Dabei können die Basisstation und die mobile Station baulich in einem Gerät vereint sein. Dies erlaubt es jedem Referenzobjekt mit mobiler Station die Signale aller anderen Referenzobjekte zu Empfangen. Dadurch kann der Abstand zwischen den Referenzobjekten mit mobiler Station und allen anderen Referenzobjekten bestimmt werden. Mit den Abstandswerten können die Positionen der Referenzobjekte, bezogen auf ein durch beliebige drei der mindestens vier Referenzobjekte mit mobilen Stationen aufgespanntes Koordinatensystem, bestimmt werden. Dies hat zum Vorteil, dass keine äußeren Hilfsmittel benötigt werden, um die Positionen aller Referenzobjekte zu bestimmen.

In einer weiteren Ausführungsform darf das System auch null Messobjekte besitzen. Es können aber auch ein oder mehrere Messobjekte eingesetzt werden. Des Weitern müssen nicht alle Referenzobjekte ortsfest sein und werden zusätzlich zu den Basisstationen auch mit mobilen Stationen ausgestattet. Dies erlaubt es jedem Referenzobjekt die Signale aller anderen Referenzobjekte zu Empfangen. Dadurch kann der Abstand zwischen allen Paaren von Referenzobjekten bestimmt werden. In dieser Ausführungsform ist das System in der Lage, die Änderungen der relativen Positionen der Referenzobjekte untereinander zu detektieren. Falls Messobjekte vorhanden sind, wird deren Position auch relativ zu den Referenzobjekten bestimmt.

Im Folgenden werden die Verfahrensabläufe dargestellt.
1. Mindestens vier Referenzobjekte, deren Position zunächst bekannt ist, sich jedoch ändern kann, senden in zueinander definierten Zeitabständen Signale, die synchron oder wenigstens teilweise zeitlich versetzt sind. Mindestens zwei der mindestens vier Referenzobjekte senden auf eng benachbarten Frequenzen deren Sendesignale ein periodisches Muster aufweisen.
2. Die Empfänger der mobilen Stationen der Messobjekte oder der Referenzobjekte nach Punkt 2. die zusätzlich eine mobile Station besitzen, die baulich mit der mobilen Station vereint sein können empfangen die Signale der Referenzobjekte.
3. Die mobilen Stationen der Messobjekte oder der Referenzobjekte, die zusätzlich eine mobile Station besitzen, trennen weit auseinander liegende Frequenzen und eventuell vorhandenes Rauschen. Dazu können nach dem Stand der Technik bekannte Verfahren herangezogen werden, wie beispielsweise die Verwendung von Bandpassfiltern oder Tiefpassfiltern.
4. Signale der Referenzobjekte mit eng benachbarten Frequenzen mit periodischen Mustern werden von den mobilen Stationen der Messobjekte oder der Referenzobjekte, die eine mobile Station besitzen unter Ausnutzung der Periodizität der Muster getrennt. Dies kann mit dem Fachmann bekannten Mitteln, wie mit Kammfiltern oder Fouriertransformationen geschehen.
5. Die mobilen Stationen messen den Zeitpunkt des Eintreffens der Signale von allen Referenzobjekten. Aus diesen Zeitpunkten kann jede mobile Station ihre Position berechnen. Die dafür geeigneten Verfahren sind nach dem Stand der Technik, z.B. aus dem GPS-Verfahren bekannt. Um die Genauigkeit der Messung der Eintreffzeit zu erhöhen, kann eine zeitversetzte Unterabtastung der empfangenen Signale verwendet werden. Die Phasenlage der ankommenden Signale können für die Verfeinerung der Positionsbestimmung eingesetzt werden.

Die erfindungsgemäße Vorrichtung besitzt mindestens vier Referenzobjekte, die jeweils mit Basisstationen mit einem Sender und mit Mitteln zum Synchronisieren der Uhren der Basisstationen ausgestattet sind, sowie mindestens ein Objekt bzw. Messobjekt, das eine mobile Station mit Empfänger besitzt. Das Objekt mit mobiler Station kann auch eines der mindestens vier Referenzobjekte sein. In diesem Fall besitzt das Objekt eine Basisstation und eine mobile Station, die ggf. baulich vereint sein können sowie einen Sender und einen Empfänger. Mindestens zwei der Basisstationen besitzen Sender mit Mitteln zum Emittieren von Signalen mit periodischen Mustern, die auf eng benachbarten Frequenzen gesendet werden. Mindestens eine Basisstation kann ein Mittel zum Emittieren von Signalen zu einer anderen Basisstation weit auseinander liegenden Frequenzen besitzen. Die mobilen Stationen besitzen Mittel zum Trennen von eng beieinander liegenden Frequenzen und können Mittel zum Trennen weit auseinander liegender Frequenzen besitzen. Die Mittel zum Trennen von weit auseinander liegenden Frequenzen können beispielsweise Bandpassfilter oder Tiefpassfilter sein. Die Mittel zum Trennen von eng beieinander liegenden Frequenzen können Kammfilter oder Mittel zur Durchführung einer Fouriertransformation sein.

In einer bevorzugten Ausführungsform besitzt wenigstens ein Teil der Referenzobjekte, jedoch mindestens drei, vorzugsweise alle Referenzobjekte, eine zusätzliche mobile Station mit Empfänger.

Die Figuren zeigen beispielhaft Ausführungsbeispiele für Merkmale der Erfindung.

Es zeigt:
Fig. 1: Beispiele für zwei Sendesignale mit periodischem Muster
Fig.2: das Spektrum von Sendesignalen von Sendern zweier Referenzobjekte deren Frequenzen eng beieinander liegen.
Fig.3: Trägerfrequenzen von N Sendern verschiedener Referenzobjekte deren Frequenzen eng beieinander liegen.
Fig.4: Ein Flussdiagramm für eine mögliche Realisierung der Signalerzeugung in einer Basisstation und der Signalverarbeitung im für diese Basisstation zuständigen Teil einer mobilen Station.

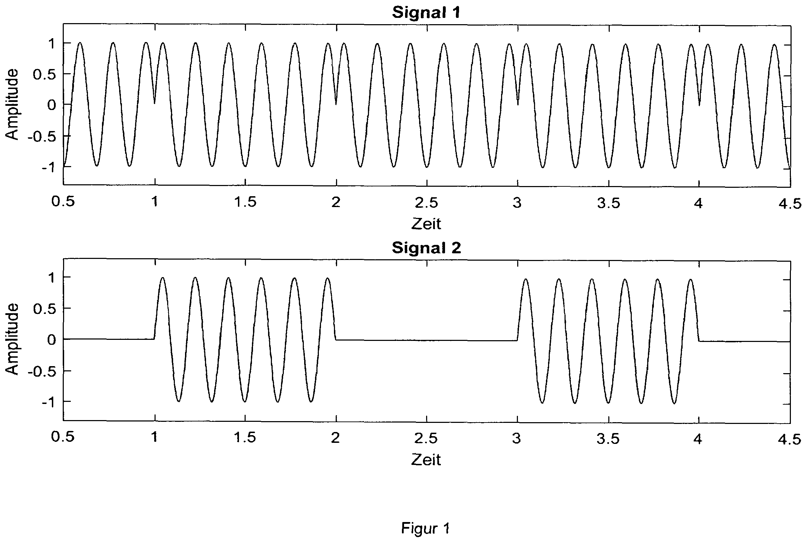

Figur 1 zeigt Beispiele für zwei geeignete Sendesignale mit periodischen Mustern. Signal 1 ist phasenmoduliert, Signal 2 ist amplitudenmoduliert. In Figur 1 bezeichnet die x-Achse die Zeit in [s] und die y-Ache die Amplitude.

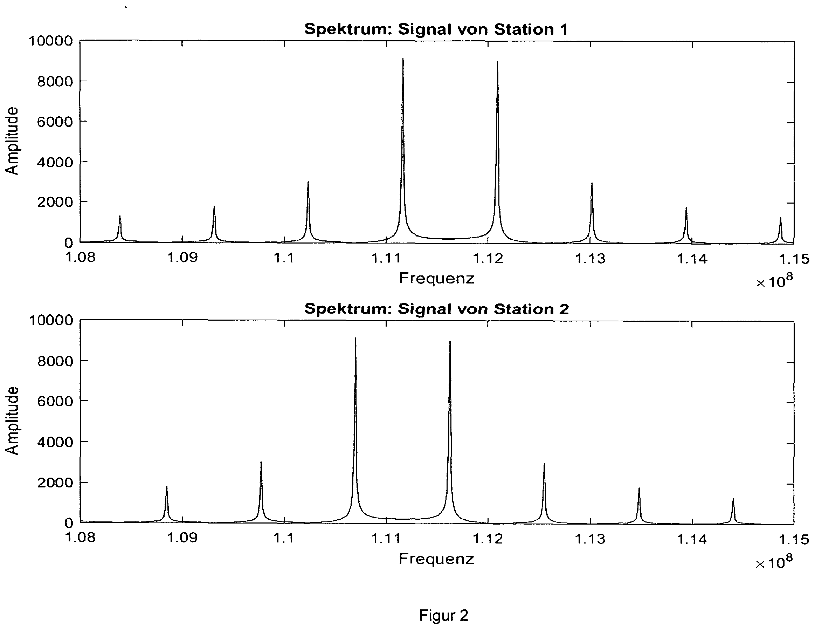

Figur 2 zeigt den Amplitudenverlauf des Spektrums von Sendesignalen zweier Basisstationen deren Frequenzen eng beieinander liegen. In Figur 2 bezeichnet die x-Achse die Frequenz in [Hz] und die y-Ache die Amplitude.

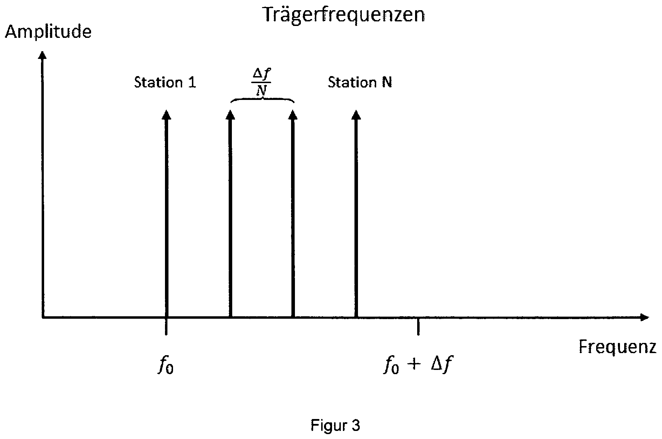

In Figur 3 sind die Trägerfrequenzen von N Sendern dargestellt, die der Formel 1 genügen. Δf ist dabei der Frequenzabstand zwischen den Maxima im Fourier-Spektrum, der verwendeten Signale, f₀ bezeichnet die Frequenz eines der Basisstationen. In Figur 3 bezeichnet die x-Achse die Frequenz in [Hz] und die y-Ache die Amplitude.

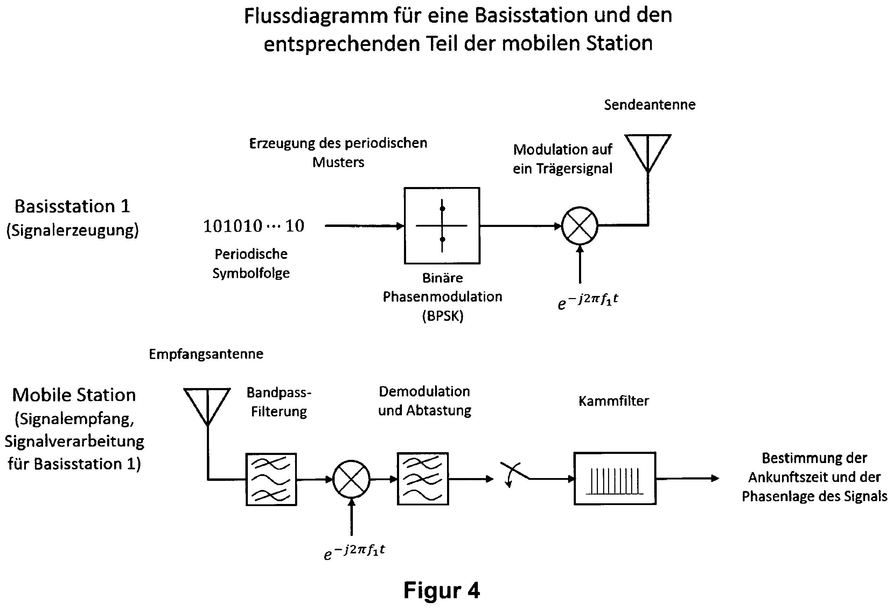

Figur 4 zeigt ein Flussdiagramm, welches eine mögliche Realisierung der Signalerzeugung in einer Basisstation, sowie eine mögliche Realisierung des Empfängers und der Signalverarbeitung im für diese Basisstation zuständigen Teil einer mobilen Station beschreibt. Eine periodische Symbolfolge wird mit Hilfe von Binary Phase Shift Keying in ein periodisches Muster überführt. Das periodische Muster wird auf ein Trägersignal der gewünschten Frequenz *f*₁ moduliert und gesendet. Die mobilen Stationen empfangen das Signal und führen eine Bandpassfilterung durch, welche Rauschen und Signale auf weit entfernte Frequenzen unterdrückt. Das Signal wird demoduliert und abgetastet. Ein Kammfilter wird eingesetzt um das Signal von den Signalen anderer Referenzobjekte zu trennen, die auf eng benachbarten Frequenzen senden. Anschließend wird die Ankunftszeit und Phasenlage des Signals bestimmt.

### Beispiel:

Nachfolgend werden für ein Beispiel Parameter angegeben, mit denen das erfindungsgemäße Verfahren durchgeführt werden kann, ohne dass dies einschränkend auszulegen ist.

16 Referenzobjekte mit Basisstationen, welche zeitlich synchronisiert sind, werden an festgelegten Positionen aufgestellt. Alle Basisstationen senden Signale mit dem gleichen periodischen Muster aus. Jeweils zwei Basisstationen senden zeitversetzt auf der gleichen Frequenz, sodass insgesamt auf acht verschiedenen Frequenzen gesendet wird. Die ersten vier und die letzten vier dieser Frequenzen sind jeweils untereinander eng benachbart. Von der Gruppe der letzten vier Frequenzen liegt die Gruppe der ersten vier Frequenzen weit auseinander. Als Frequenzbereiche kommen die ISM-Bänder bei 2 GHz und 5,8 GHz in Frage. So können z.B. die Frequenzen der ersten Gruppe im 2 GHz Band und die der zweiten Gruppe im 5,8 GHz Band liegen.

Die mobilen Stationen empfangen die Signale der Basisstationen und trennen Signale auf weit auseinander liegenden Frequenzen mit Bandpassfiltern. Signale, die auf eng benachbarten Frequenzen gesendet werden, können mit Kammfiltern getrennt werden. Signale, die auf der gleichen Frequenz gesendet werden, haben einen Zeitversatz und beeinflussen sich nicht gegenseitig.

Die mobilen Stationen verwenden zeitversetzt Unterabtastung, um die Signale der Basisstationen mit hoher Rate abzutasten und die Ankunftszeit der Signale zu ermitteln. Aus den Ankunftszeiten kann die Position der mobilen Station mit nach dem Stand der Technik, z.B. aus dem GPS-Verfahren, bekannten Verfahren ermittelt werden. Zusätzlich kann die Phasenlage der ankommenden Signale dazu eingesetzt werden, um die Genauigkeit der Positionsbestimmung zu erhöhen.

**Tabelle 1**

| Zahl der BS | Zahl der zur Verfügung stehenden unterschiedlichen Frequenzen | Zahl der eng benachbarten Frequenzen pro Untergruppe | Zahl der Untergruppen mit weit auseinander liegenden Frequenzen | Zahl der zur Verfügung stehenden Zeitfenster |
|---|---|---|---|---|
| 8 | 4 | 2 | 2 | 2 |
| 12 | 6 | 1 | 6 | 2 |
| 12 | 6 | 6 | 1 | 2 |
| 12 | 12 | 4 | 3 | 1 |
| 8 | 8 | 8 | 1 | 1 |

**Tabelle 2**

| | t₁ | t₂ | t3 |
|---|---|---|---|
| f₁ | BS₁(M₁) | BS₅(M₃) | BS₇(M₁) |
| f₂ | BS₂(M₁) | BS₆(M₃) | |
| f₃ | BS₃(M₂) | | BS₈(M₂) |
| f₄ | BS₄(M₂) | | |

**Tabelle 3**

| | t₁ | t₂ | t₃ |
|---|---|---|---|
| f₁ | BS₁(M₁) | BS₅(M₁) | BS₉(M₁) |
| f₂ | BS₂(M₁) | BS₆(M₁) | BS₁₀(M₁) |
| f₃ | BS₃(M₁) | BS₇(M₁) | BS₁₁(M₁) |
| f₄ | BS₄(M₁) | BS₈(M₁) | BS₁₂(M₁) |

## Patentansprüche

1. Verfahren zur Positionsbestimmung mindestens eines Messobjekts, welches eine mobile Station mit einem Empfänger beinhaltet und bei dem mindestens vier Referenzobjekte, die eine Basisstation mit einem Sender beinhalten, wobei mindestens ein Referenzobjekt eine mobile Station mit einem Empfänger besitzen kann, und damit Referenzobjekt und Messobjekt zugleich ist, wobei die Basisstation (1) und die mobile Station baulich vereint sein können, und wobei die Referenzobjekte zunächst bekannte Positionen haben, die sich ändern können, wobei die Sender der Basisstationen (1) Signale versenden und die mobilen Stationen Signale empfangen,
**dadurch gekennzeichnet,**
**dass** mindestens zwei Sender der Basisstationen (1) periodische Signale unterschiedlicher Frequenzen, in zueinander definierten Zeitabständen aussenden, wobei diese Frequenzen eng benachbart sind und dass die eng benachbarten Frequenzen weniger als eine Bandbreite der verwendeten Signale auseinander liegen und
**dass** sich die eng beieinander liegenden Frequenzen der Sender der Basisstationen (1) gemäß Formel 1 $\left|{f}_{n}-{f}_{m}\right| mod Δ f \neq 0$ (Formel 1) verhalten,
wobei in Formel 1
fₙ die Frequenz eines Senders einer beliebigen Basisstation (1),
fₘ die Frequenz eines Senders einer beliebigen anderen Basisstation (1) und
Δf der Frequenzabstand zwischen den Maxima im Fourier-Spektrum der verwendeten Signale ist.

2. Verfahren nach Anspruch 1,
**dadurch gekennzeichnet,**
**dass** die Periodendauern so gewählt sind, dass der Frequenzabstand Δf für die Sender der Basisstationen (1) deren Frequenzen eng beieinander liegen gleich ist.

3. Verfahren nach einem der Ansprüche 1 oder 2,
**dadurch gekennzeichnet,**
**dass** die Sendesignale der Sender der Basisstationen (1) mit definierter Zeittaktung gepulst werden.

4. Verfahren nach einem der Ansprüche 1 bis 3,
**dadurch gekennzeichnet,**
**dass** die Phase und/oder Amplitude der periodischen Signale kontinuierlich oder diskontinuierlich geändert werden.

5. Verfahren nach einem der Ansprüche 1 bis 4,
**dadurch gekennzeichnet,**
**dass** mindestens zwei Sender der Basisstationen (1) Signale senden, deren Frequenzen weit auseinander liegen.

6. Verfahren nach Anspruch 5,
**dadurch gekennzeichnet,**
**dass** weit auseinander liegende Frequenzen gesendet werden, die eine Frequenzdifferenz aufweisen, die größer ist, als die Bandbreite der verwendeten Signale.

7. Verfahren nach einem der Ansprüche 1 bis 6,
**dadurch gekennzeichnet,**
**dass** mindestens zwei Sender der Basisstationen (1) Signale senden, die zeitversetzt sind.

8. Verfahren nach einem der Ansprüche 1 bis 7,
**dadurch gekennzeichnet,**
**dass** die Phasenlage der ankommenden Signale der Sender der Basisstationen (1) für die Verfeinerung der Positionsbestimmung verwendet wird.

9. Verfahren nach einem der Ansprüche 1 bis 8,
**dadurch gekennzeichnet,**
**dass** eine zeitversetzte Unterabtastung der empfangenen Signale vorgenommen wird.

10. Verfahren nach einem der Ansprüche 1 bis 9,
**dadurch gekennzeichnet,**
**dass** wenigstens ein Teil der Referenzobjekte, jedoch mindestens drei, vorzugsweise alle Referenzobjekte zusätzlich zur Basisstation (1) mit einem Sender auch mit mobilen Stationen mit einem Empfänger ausgestattet werden, wobei die Basisstation (1) und die mobile Station baulich vereint sein können, die es den Referenzobjekten mit mobiler Station erlauben, die Signale von anderen Referenzobjekten zu empfangen.

11. Vorrichtung zur Positionsbestimmung von Objekten mit einer mobilen Station und einem Empfänger mit Referenzobjekten, enthaltend eine Basisstation (1) und einen Sender, deren Position zunächst bekannt ist und die sich ändern kann, und mindestens ein Messobjekt, enthaltend eine mobile Station und einen Empfänger, welche zusätzlich eine Basisstation (1) mit einem Sender beinhalten kann und damit auch zu den Referenzobjekten gehören kann, dessen Position zu bestimmen ist, wobei die Basisstation (1) und die mobile Station in einem Gerät baulich vereint sind,
**dadurch gekennzeichnet,**
**dass** sie über mindestens vier Referenzobjekte verfügt, die jeweils mit einer Basisstation (1) ausgestattet sind, welche Mittel zum zeitlichen Synchronisieren der Basisstationen (1) und einen Sender besitzen, wobei mindestens zwei Basisstationen (1) über Sender mit Mitteln zum Emittieren von Signalen mit periodischen Mustern, die auf eng benachbarten Frequenzen gesendet werden, und die weniger als eine Bandbreite der verwendeten Signale auseinander liegen verfügen, und dass sich die eng beieinander liegenden Frequenzen der Sender der Basisstationen (1) gemäß Formel 1 ${f}_{n} - {f}_{m} | mod Δ f \neq 0$ (Formel 1) verhalten, wobei in Formel 1 fₙ die Frequenz eines Senders einer beliebigen Basisstation (1), fₘ die Frequenz eines Senders einer beliebigen anderen Basisstation (1) und Δf der Frequenzabstand zwischen den Maxima im Fourier-Spektrum der verwendeten Signale ist.

12. Vorrichtung nach Anspruch 11,
**dadurch gekennzeichnet,**
**dass** mindestens eine Basisstation (1) Mittel zum Emittieren von Signalen zu einer anderen Basisstation (1) weit auseinander liegenden Frequenz besitzt.

13. Vorrichtung nach einem der Ansprüche 11 oder 12,
**dadurch gekennzeichnet,**
**dass** die mobilen Stationen Mittel zum Trennen eng beieinander liegenden Frequenzen und/oder Mittel zum Trennen von weit auseinander liegenden Frequenzen besitzen.

## Claims

1. A method for position determination of at least one measurement object which includes a mobile station with a receiver and in which at least four reference objects which include a base station with a transmitter, wherein at least one reference object can have a mobile station with a receiver, and thus is reference object and measurement object at the same time, wherein the base station (1) and the mobile station can be structurally combined, and wherein the reference objects initially have known positions which are able to change, wherein the transmitters of the base stations (1) transmit signals and the mobile stations receive signals,
**characterized in**
**that** at least two transmitters of the base stations (1) send out periodic signals of different frequencies at time intervals which are defined relative to each other, wherein these frequencies are closely adjacent, and that the closely adjacent frequencies are less than a bandwidth of the used signals apart from each other, and in that the closely spaced frequencies of the transmitters of the base stations (1) behave according to formula 1 $\left|{f}_{n}-{f}_{m}\right| mod Δ f \neq 0$ (formula 1), wherein in formula 1,
fₙ is the frequency of a transmitter of any base station (1),
fₘ is the frequency of a transmitter of any other base station (1), and
Δf is the frequency spacing between the maxima in the Fourier spectrum of the used signals.

2. A method according to claim 1,
**characterized in**
**that** the period durations are chosen such that the frequency spacing Δf is the same for the transmitters of the base stations (1), the frequencies of which are closely spaced.

3. A method according to any one of claims 1 or 2,
**characterized in**
**that** the transmitter signals of the transmitters of the base stations (1) are pulsed with defined timing.

4. A method according to any one of claims 1 to 3,
**characterized in**
**that** the phase and/or amplitude of the periodic signals are changed continuously or discontinuously.

5. A method according to any one of claims 1 to 4,
**characterized in**
**that** at least two transmitters of the base stations (1) transmit signals, the frequencies of which are far apart from each other.

6. A method according to claim 5,
**characterized in**
**that** frequencies being far apart from each other are transmitted, which have a frequency difference that is larger than the bandwidth of the used signals.

7. A method according to any one of claims 1 to 6,
**characterized in**
**that** at least two transmitters of the base stations (1) transmit signals which are time-shifted.

8. A method according to any one of claims 1 to 7,
**characterized in**
**that** the phase position of the incoming signals from the transmitters of the base stations (1) is used for refining the position determination.

9. A method according to any one of claims 1 to 8,
**characterized in**
**that** a time-shifted undersampling of the received signals is carried out.

10. A method according to any one of claims 1 to 9,
**characterized in**
**that** at least a part of the reference objects, but at least three, preferably all reference objects in addition to the base station (1) with a transmitter are also equipped with mobile stations with a receiver, wherein the base station (1) and the mobile station can be structurally combined which allow the reference objects with mobile station to receive the signals from other reference objects.

11. A device for position determination of objects with a mobile station and a receiver having reference objects, containing a base station (1) and a transmitter, the position of which is initially known and which is able to change, and at least one measurement object, containing a mobile station and a receiver, which can also include a base station (1) with a transmitter and can thus also belong to the reference objects, the position of which is to be determined, wherein the base station (1) and the mobile station are structurally combined in an apparatus,
**characterized in**
**that** it has at least four reference objects which are each equipped with a base station (1), which have means for temporally synchronizing the base stations (1) and a transmitter, wherein at least two base stations (1) have transmitters with means for emitting signals with periodic patterns that are transmitted on closely adjacent frequencies and which are less than a bandwidth of the used signals apart from each other, and in that the closely spaced frequencies of the transmitters of the base stations (1) behave according to formula 1 ${f}_{n} - {f}_{m} | mod Δ f \neq 0$ (formula 1) wherein in formula 1, fₙ is the frequency of a transmitter of any base station (1), fₘ is the frequency of a transmitter of any other base station (1), and Δf is the frequency spacing between the maxima in the Fourier spectrum of the used signals.

12. A device according to claim 11,
**characterized in**
**that** at least one base station (1) has means for emitting signals to another base station (1) of frequencies that are far apart from each other.

13. A device according to any one of claims 11 or 12,
**characterized in**
**that** the mobile stations have means for separating closely spaced frequencies and/or means for separating frequencies that are far apart from each other.

## Revendications

1. Procédé de détermination de la position d'au moins un objet à mesurer, qui comporte un poste mobile ayant un récepteur et dans lequel il y a au moins quatre objets de référence, qui comportent un poste de base ayant un émetteur, au moins un objet de référence pouvant posséder un poste mobile ayant un récepteur, et ainsi être à la fois un objet de référence et un objet à mesurer, le poste (1) de base et le poste mobile pouvant être réunis en construction, et dans lequel les objets de référence ont d'abord des positions connues, qui peuvent se modifier, les émetteurs des postes (1) de base envoyant des signaux et les postes mobiles recevant des signaux,
**caractérisé**
**en ce qu'**au moins deux émetteurs des postes (1) de base envoient des signaux périodiques de fréquences différentes, à des intervalles de temps définis les uns par rapport aux autres, ces fréquences étant étroitement voisines, et en ce que les fréquences étroitement voisines sont moins écartées les unes des autres qu'une largeur de bande des signaux utilisés et
**en ce que** les fréquences étroitement voisines des émetteurs des postes (1) de base se comportent suivant la formule $\left|{f}_{n}-{f}_{m}\right| mod Δ f \neq 0$ (formule 1) dans lequel, dans la formule 1
fₙ est la fréquence d'un émetteur d'un poste (1) de base quelconque,
fₘ est la fréquence d'un émetteur d'un autre poste (1) de base quelconque et
Δf est l'espacement de fréquence entre les maxima du spectre de Fourier des signaux utilisés.

2. Procédé suivant la revendication 1,
**caractérisé**
**en ce que** l'on choisit les durées des périodes de manière à ce que l'espacement Δf de fréquence, pour les émetteurs des postes (1) de base, dont les fréquences sont étroitement voisines, soit le même.

3. Procédé suivant l'une des revendications 1 ou 2,
**caractérisé**
**en ce que** les signaux d'émission des émetteurs des postes (1) de base sont pulsés à une cadence définie dans le temps.

4. Procédé suivant l'une des revendications 1 à 3,
**caractérisé**
**en ce que** l'on modifie en continu la phase et/ou l'amplitude des signaux périodiques.

5. Procédé suivant l'une des revendications 1 à 4,
**caractérisé**
**en ce qu'**au moins deux émetteurs des postes (1) de base envoient des signaux, dont les fréquences s'écartent beaucoup les unes des autres.

6. Procédé suivant la revendication 5,
**caractérisé**
**en ce que** l'on envoie des fréquences, qui s'écartent beaucoup les unes des autres, qui ont une différence de fréquence, qui est plus grande que la largeur de bande des signaux utilisés.

7. Procédé suivant l'une des revendications 1 à 6,
**caractérisé**
**en ce qu'**au moins deux émetteurs des postes (1) de basé envoient des signaux, qui sont décalés dans le temps.

8. Procédé suivant l'une des revendications 1 à 7,
**caractérisé**
**en ce que** l'on utilise la position en phase des signaux arrivant des émetteurs des postes (1) de base pour affiner la détermination de position.

9. Procédé suivant l'une des revendications 1 à 8,
**caractérisé**
**en ce que** l'on effectue un sous-échantillonnage décalé dans le temps des signaux reçus.

10. Procédé suivant l'une des revendications 1 à 9,
**caractérisé**
**en ce que** l'on équipe au moins une partie des objets de référence, toutefois, au moins trois, de préférence tous les objets de référence, supplémentairement au poste (1) de base, ayant un émetteur, également de postes mobiles ayant un récepteur, le poste (1) de base et le poste mobile pouvant être réunis en construction, en permettant aux objets de référence ayant un poste mobile de recevoir les signaux d'autres objets de référence.

11. Dispositif de détermination de la position d'objets, comprenant un poste mobile et un récepteur, par des objets de références comportant un poste (1) de base et un émetteur, dont la position est connue d'abord et qui peut se modifier, et au moins un objet à mesurer comportant un poste mobile et un récepteur, qui peut comporter supplémentairement un poste (1) de base ayant un émetteur et peut appartenir ainsi également aux objets de référence, la position de l'objet à mesurer devant être déterminée, le poste (1) de base et le poste mobile étant réunis en construction dans un appareil,
**caractérisé**
**en ce qu'**il dispose d'au moins quatre objets de référence, qui sont équipés chacun d'un poste (1) de base, lesquels possèdent des moyens de synchronisation dans le temps des postes (1) de base et un émetteur, dans lequel au moins deux postes (1) de base disposent d'émetteurs ayant des moyens d'émission de signaux à motifs périodiques, qui sont envoyés sur des fréquences étroitement voisines et qui s'écartent moins les unes des autres qu'une largeur de bande des signaux utilisé, et en ce que les fréquences étroitement voisines des émetteurs des postes (1) de base se comportent suivant la formule 1 ${f}_{n} - {f}_{m} | mod Δ f \neq 0$ (formule 1) dans lequel dans la formule 1 fₙ est la fréquence d'un émetteur d'un poste (1) de base quelconque, fₘ est la fréquence d'un émetteur d'un autre poste (1) de base quelconque et Δf est l'espacement de fréquence entre les maxima du spectre de Fourier des signaux utilisés.

12. Dispositif suivant la revendication 11,
**caractérisé**
**en ce qu'**au moins un poste (1) de base a des moyens d'émission de signaux vers un autre poste (1) de base de fréquences s'écartant beaucoup l'une de l'autre.

13. Dispositif suivant l'une des revendications 11 ou 12,
**caractérisé**
**en ce que** les postes mobiles ont des moyens de séparation de fréquences étroitement voisines et/ou des moyens de séparation de fréquences s'écartant beaucoup les unes des autres.
